# EUROPEAN PATENT APPLICATION

(11) **EP 2 226 801 A1**
(43) Date of publication of application: **08.09.2010**
(21) Application number: 09305190.2
(22) Date of filing: 02.03.2009
(51) Int. Cl.: G11B 7/09

(54) **Actuator for accessing moving storage media and drive having the actuator**

(71) Applicant: Thomson Licensing SA, 92130 Issy-les-Moulineaux (FR)
(72) Inventor: Bammert, Michael, 78739, Hardt (DE); Suzuki, Tsuneo, 78087, Mönchweiler (DE); Dupper, Rolf, 78050, Villingen-Schwenningen (DE)
(74) Representative: Thies, Stephan

(57) **Abstract**

Actuator for accessing moving storage media and drive having the actuator.

An actuator (P) for accessing moving storage media (D), which carries substantially parallel information tracks (T), has a carrier (C), a lens holder (A) and at least four suspension wires (4), which join the carrier (C) and the lens holder (A). The lens holder (A) has a body (B) with a lens (3) and is movable in a tracking direction (X) and in a focus direction (Y). The carrier (C) has a first holder element (2A) and a second holder element (2B) which are arranged at opposite sides of the body (B) in an information direction (Z) orthogonal to the tracking direction (X) and the focus direction (Y). The suspension wires (4) extend at opposite sides of the body (B) in the information direction (Z) and are connected to the holder elements (2A, 2B). They are connected to body (B) at opposite sides of the body (B) in the tracking direction (X). According to the invention the suspension wires (4) are rigidly connected to the first holder element (2A) and movably connected to the second holder element (2B).

## Description

### BACKGROUND OF THE INVENTION

### FIELD OF THE INVENTION

The present invention is related to an actuator for accessing moving storage media according to the preamble of claim 1 and to a corresponding drive. Actuators are used as part of a recording and/or reproducing apparatus, e.g. of a DVD player, a DVD recorder or similar apparatuses.

### DESCRIPTION OF THE PRIOR ART

Actuators for accessing moving storage media, carrying substantially parallel information tracks, are parts of pickups which record and/or reproduce information with respect to the moving storage media, namely a turning disk, while moving in the radial direction of the disk. A pickup further comprises an optical body in which typically one or more light beams are generated and focused onto a target or scanning spot on a layer within the disk. Readout light beams coming from the disk are projected onto a photo detector, where they are converted into electrical signals for further evaluation.

A well-known actuator comprises a carrier, a lens holder with a body and a lens, and suspension wires joining the carrier and the lens holder. The suspension wires serve a double purpose: mechanically they movably support the lens holder and electrically they apply currents to coils, which are arranged on the body of the lens holder. The coils and a magnet configuration, all together referred to as a magnetic driving portion, initiate the movements of the lens holder. The lens holder is movable relatively to the carrier at least in a focus direction substantially orthogonal to the disk, and in a tracking direction parallel to the surface of the disk, substantially orthogonal to the information tracks. By moving the lens holder with the lens, the beam spot can be accurately located on the disk.

An actuator for accessing moving storage media, referred to as an optical head actuator, is shown in Patent Abstract of Japan JP 2000163774 A. The actuator has a lens holder which is supported in a flat surface with both-side holdings by four lines of elastic wires. The elastic wires have compliance in the longitudinal direction of them.

Another actuator for accessing moving storage media, referred to as an optical actuator, is shown in Patent Abstract of Japan JP 2000163773 A. The actuator has a carrier with holder elements, referred to as supporting plates, a lens holder with a body carrying a lens and suspension wires, referred to as elastic wires. The lens holder is made to be driven in a focus direction and in a tracking direction. The lens holder is supported in a flat surface with both-side holdings around the centre of the lens by four lines of elastic wires. End parts of the elastic wires are fixed to the supporting plates, which have elasticity and with which displacement is possible in the longitudinal direction of the elastic wires. As a result, the two supporting plates should have identical properties and a high elasticity. Especially the identical properties of the supporting plates may cause difficulties while manufacturing and assembling the optical head lens holder.

### SUMMARY OF THE INVENTION

It is therefore desirable to improve an actuator according to the preamble of claim 1, in particular to improve the manufacturing and assembling of the actuator.

According to the invention this is achieved by the features of claim 1. Possible advantageous developments of the invention are specified in the dependent claims.

An actuator for accessing moving storage media, which carries substantially parallel information tracks, has a carrier, a lens holder and suspension wires, which join the carrier and the lens holder. The lens holder has a body which is provided with a lens of an optical body and is movable at least in a tracking direction and in a focus direction. The carrier has a first holder element and a second holder element arranged at opposite sides of the body in an information direction orthogonal to the tracking direction and the focus direction.

The suspension wires extend at opposite sides of the body in the information direction, while they are connected to the holder elements of the carrier at opposite sides of the body in the information direction and connected to the body at opposite sides of the body in the tracking direction.

The suspension wires provide a two-sided supporting of the lens holder. A two-sided supporting of the lens holder avoids tangential tilt movement when the lens holder is driven and displaced in the focus direction.

According to the invention the suspension wires are rigidly connected to the first holder element and are movably connected to the second holder element. In particular, the suspension wires are guided through the second holder element in the information direction without mobility in the focus and in the tracking direction. The guiding is constructed in a way that the suspension wires are able to slide in the information direction, similar to a sliding in an axial bearing. Displacement of the suspension wires in the information direction allows length compensation.

An actuator according to the invention is able to move in the focus direction and in the tracking direction without tangential tilt movements. It has stiffness against transversal bend, while allowing length compensation on one of its sides, when the lens holder is deflected. The manufacturing and the assembling of the actuator is improved.

Preferably, the rigid connection of the suspension wire to the first holder element is generated as a soldering point.

Preferably, the movable connection of the suspension wire to the second holder element is generated as a hole through the second holder element.

As an embodiment of the invention, the suspension wires are arranged in one plane orthogonal to the focus direction. This enables a flat construction of the lens holder, which may miniaturise the actuator with the lens holder and which is advantageously used for mobile applications.

As an embodiment of the invention, the actuator has a number of suspension wires, which is an integer multiple of two, where the suspension wires extend between the first and second holder elements and are connected to the body at its centre region at opposite sides of the body in the tracking direction.

Preferably, the integer multiple is two or more, where two or more suspension wires each located at opposite sides of the body in the tracking direction are arranged side by side in the tracking direction. The two or more suspension wires each are displaced in focus direction or, alternatively, arranged in one plane orthogonal to the focus direction. As a result, also radial tilt movement is hindered.

Preferably, the two or more suspension wires each extend parallel. Preferably, the actuator has four suspension wires.

As an alternative embodiment of the invention, the actuator has a number of suspension wires, which is an integer multiple of four, where on one side of the arrangement first suspension wires extend between the first holder element and the body, and on the other side of the arrangement second suspension wires separate from the first suspension wires extend between the second holder element and the body; and where the suspension wires of the two sides are connected to the body at opposite ends of the body in the tracking direction.

Preferably, the integer multiple is two or more, where two or more suspension wires of each half of the suspension wires each located at opposite sides of the body in the tracking direction are arranged side by side in the tracking direction. The two or more suspension wires each are displaced in focus direction or, alternatively, arranged in one plane orthogonal to the focus direction. As a result, also radial tilt movement is hindered.

Preferably, the suspension wires are arranged in an acute angle relative to the information direction and relative to each other in such a way, that their distance at the holder elements is somewhat larger than at the body of the lens holder. With suspension wires arranged in this way, the actuator needs somewhat more deflection power than with perfectly parallel suspension wires. The advantage of this arrangement of the suspension wires is a higher stability against mechanical resonances.

Preferably, the acute angle amounts between 2° and 6°. Preferably, the actuator has eight suspension wires, four for each half.

Preferably, a moving storage media drive which comprise a pickup with an actuator and moving means has an actuator as mentioned above.

The carrier being an ensemble of rigidly connected elements does not preclude that typically the actuator as a whole, including carrier, suspension wires and lens holder, is movable and is being moved in a direction orthogonal to information tracks on the storage medium, so that all storage locations on the medium can be accessed. In this, accessing shall encompass reading access for reading information from the storage medium, or writing access for writing or recording information into the storage medium, or combinations of reading and writing accesses.

One possible form of moving storage media is disks carrying concentric circular or spiral information tracks, with the access being of a reflective type where an access light beam is being generated and focused onto the information track and a reflected light beam, coming back from and being modulated by the information track, is being focused onto a photo detector arrangement and being evaluated. However, it is within the scope of this invention to be used on other forms of optical recording medium having information tracks in layers, like those in card or tape form; and regardless whether the access principle is of a reflective or of a transductive type.

### BRIEF DESCRIPTION OF THE DRAWINGS

The invention will be explained in more detail using one embodiment, illustrated in figures.

In the Figures:
- Figure 1: shows a simplified perspective view of an actuator of an embodiment of the invention,
- Figure 2: shows another simplified perspective view of the actuator of figure 1,

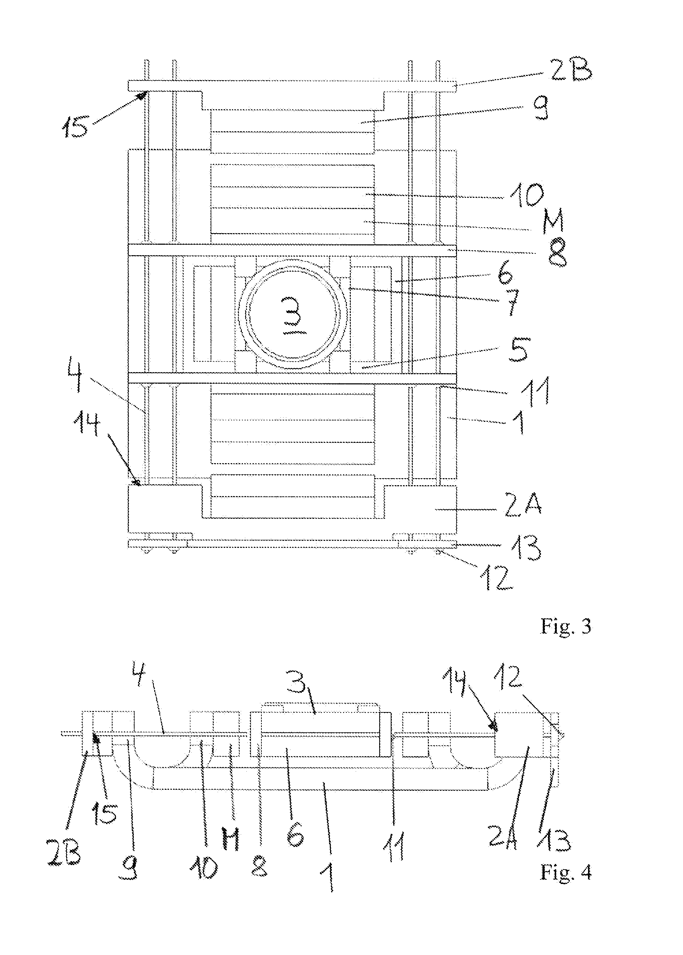

- Figure 3: shows a simplified top view of the actuator of figure 1,
- Figure 4: shows a simplified side view of the actuator of figure 1,

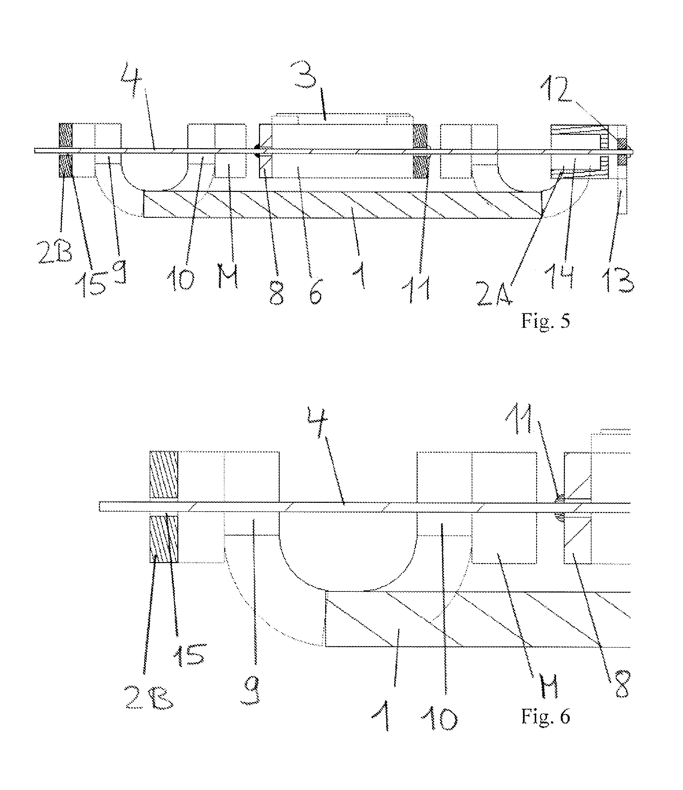

- Figure 5: shows a simplified vertical cross cut of the actuator of figure 1,
- Figure 6: shows a detail of figure 5, and

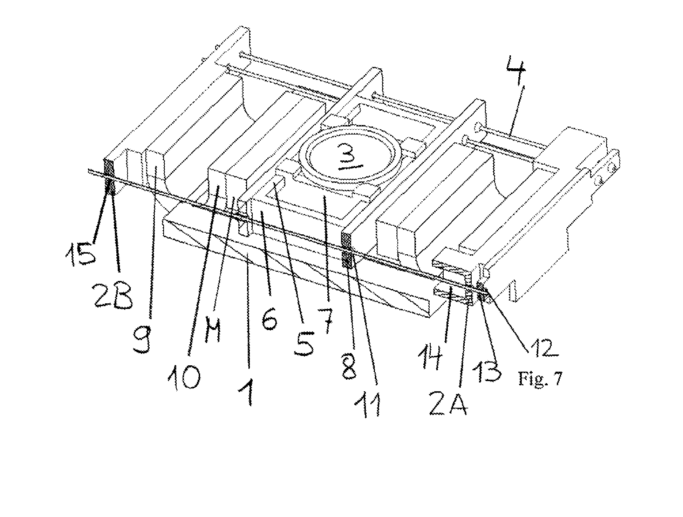

- Figure 7: shows a simplified perspective view of the actuator corresponding to figure 1 where the actuator is provided with the cross cut of figure 5.

### DETAILED DESCRIPTION OF THE INVENTION

With reference to the Figures, according to a first embodiment of the invention, an actuator P for accessing moving storage media, namely a disk D, has a carrier C with a base 1 and two holder elements 2A, 2B, a lens holder A with a body B and a lens 3, and suspension wires 4 joining the carrier C and the lens holder A.

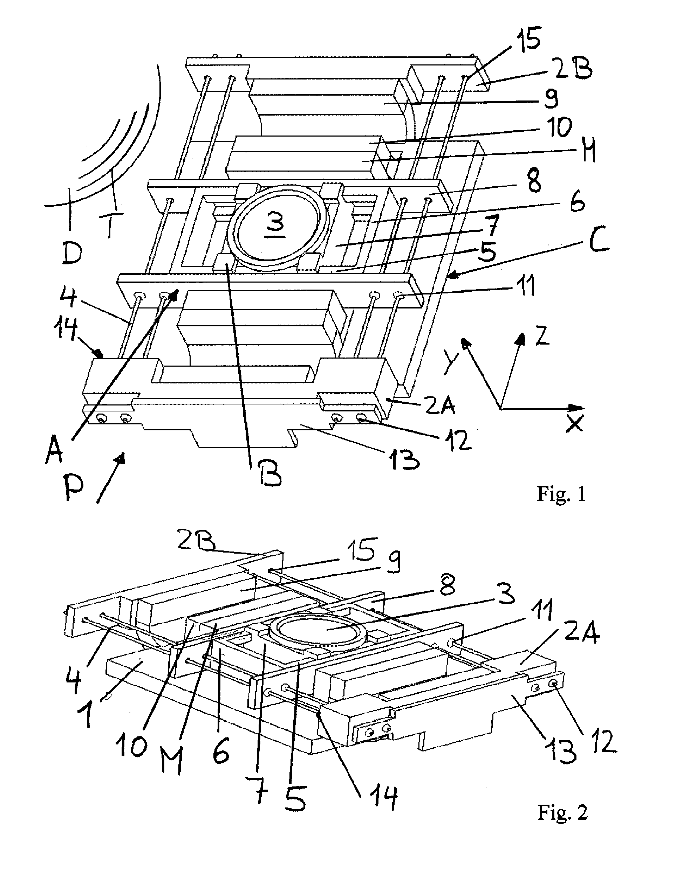

By means of the suspension with the suspension wires 4, the lens holder A with the lens 3 is able to perform focus motion in a focus direction Y orthogonal to the disk D carrying substantially circular information tracks T, shown in Figure 1 with strongly disproportionate distance. Additionally, the lens holder A is able to perform tracking motion in a tracking direction X parallel to the surface of the disk D and orthogonal to the information tracks T.

The body B of the lens holder A has a rectangular cross section in a plane spanned by the tracking direction X and an information direction Z orthogonal to the tracking direction X and the focus direction Y. The body B comprises a frame, constituted by two parallel longer sides 5 and two parallel shorter sides 6, a corpus 7 with the lens 3 in the inside of the frame and two first printed circuit boards 8. The lens 3 is arranged in an upper region of the corpus 7 in the focus direction Y, at a height above the suspension wires 4. The longer sides 5 extend parallel to the tracking direction X. The first printed circuit boards 8 carrying coils are attached at the longer sides 5 of the body B. Each first printed circuit board 8 mainly covers the outer face of the corresponding longer side 5 while parts of the first printed circuit board 8 protrude from the longer side 5 at opposite sides of the body B in the tracking direction X.

The suspension wires 4 connect the lens holder A, in particular the body B, with the carrier C in a way that the lens holder A is suspended, in focus direction Y, over the base 1 of the carrier C.

The base 1, which has basically the shape of a plate with a central opening beneath the lens 3, extends in a plane orthogonal to the focus direction Y and parallel to the disk D, i.e. in the plane spanned by the tracking direction X and the information direction Z.

The two holder elements 2A, 2B of the carrier C are arranged at opposite sides of the body B in the information direction Z and are connected to the base 1 by two carrier elements. Each carrier element has a profile with the shape of a U which extends in the tracking direction X and where legs 9, 10 of the U extend in parallel planes spanned by the focus direction Y and the tracking direction X. The outer leg 9 which is arranged outwards with respect to the body B connects the corresponding holder element 2A, 2B to the base 1. The bottom of each U-shaped carrier element is arranged in the plane of the base 1. It is a part of the base 1 and passes into side plates of the base 1, which extend in the information direction Z. To sum up, the base 1 with its two side plates extending in the information direction Z and the bottoms of the U-shaped carrier elements constitute the above mentioned plate with the central opening beneath the lens 3.

The suspension wires 4 which extend at opposite sides of the body B in the information direction Z are connected to the holder elements 2A, 2B of the carrier C at opposite sides of the body B in the information direction Z and are connected to the body B at opposite sides of the body B in the tracking direction X. The suspension wires 4 are arranged in one plane orthogonal to the focus direction Y.

In this embodiment the number N of the suspension wires 4 is four, i.e. the integer multiple I of two is two. Each suspension wire 4 extends between the first holder element 2A and the second holder element 2B and its centre region passes through corresponding openings of the protruding parts of the two first printed circuit boards 8. The suspension wires 4 are connected to the body B by soldering points 11, which are arranged on the protruding parts of the first printed circuit boards 8. In particular, the soldering points 11 are located at outer sides of the first printed circuit boards 8, which face away from the lens 3.

At opposite sides of the body B in the tracking direction X two suspension wires 4 each are arranged side by side in the above mentioned plane orthogonal to the focus direction Y. Thereby the two suspension wires 4 each are arranged side by side in the tracking direction X. By being connected to the protruding parts of the first printed circuit boards 8 the suspension wires 4 are connected to the body B in the region of its four corners. In particular, in this embodiment they are arranged parallel.

The suspension wires 4 are rigidly connected to the first holder element 2A by soldering points 12. In particular, the first holder element 2A comprises a second printed circuit board 13 carrying the soldering points 12 for one end of the suspension wires 4, i.e. the suspension wires 4 are connected to the second printed circuit board 13 by the soldering points 12. Instead of by soldering, the connection between the suspenbsion wires 4 and the first holder element 2A can alternatively be made by gluing. The second printed circuit board 13 is located at that side of the first holder element 2A which faces away from the body B, i.e. from the lens holder A. The holder element 2A comprises two chambers 14 at opposite sides in the tracking direction X, through which the suspension wires 4 are guided. Each chamber 14, filled with a damping material inside, constitutes a damping block, which damps the suspension wires 4 extending through the chamber 14.

The suspension wires 4 are movably connected to the second holder element 2B. The movable connection of each suspension wire 4 is generated as a guiding through the second holder element 2B in the information direction Z. In particular, the guiding for each other end of the suspension wires 4 is generated as a neatly fitting hole 15 through the second holder element 2B in the information direction Z. As a result, the suspension wires 4 being able to slide through the holes 15 are movably connected only in the information direction Z.

The actuator P further comprises a magnet configuration with two magnets M. The magnets M are situated above the base 1, in front of the two opposite longer sides 5 of the body B in the information direction Z, and extend in a plane spanned by the tracking direction X and the focus direction Y. The magnets M are carried by the inner legs 10 of the carrier elements, which extend orthogonal to the base 1, parallel to the corresponding magnets M, and which have shapes similar to the shapes of the corresponding magnets M.

The coils of the first printed circuit boards 8 interact with the magnets M of the magnet configuration. The coils are formed as printed coils or as fine pattern coils.

An actuator P according to the invention is usable in the so-called slide or sled design of optical media drives, where it is shiftably fitted to a frame structure of the drive, with appropriate linear driving means for realising the shift, such as linear motors or a motor driven threaded rod. Alternatively, the actuator P according to the invention is also usable in the so-called swivel arm design, where it is pivotably mounted on the end of an arm having a pivoting axis parallel to the focus direction. In that way, the actuator P is movable across the tracks T on the surface of the disk D along an arc which has its main extension in the tracking direction X.

The arrangement of the suspension wires 4 in one plane with the two-sided connection to the lens holder A allows a low overall height of the actuator P combined with stiffness against transversal bend. Inter alia, the rigid connection of the suspension wires 4 to the carrier C at their one ends combined with the movable connection of the suspension wires 4 to the carrier C at their other ends improves the manufacturing and assembling of the actuator P.

As an alternative of the first embodiment, the driving portion which comprises the coils of the first printed circuit board 8 and the magnet configuration with the two magnets M is also designed for radial tilt compensation.

An alternative second embodiment which is not shown in the figures corresponds to the first embodiment except for the following features:

The number N of the suspension wires is eight, i.e. the integer multiple I of two, is two. The first four suspension wires, i.e. the first suspension wires of one side, extend between the first holder element and the body, while the second four suspension wires, i.e. the suspension wires of the other side, extend between the second holder element and the body. The suspension wires of both sides are connected to the body at opposite ends of the body in the tracking direction X. In particular, two suspension wires are connected at each of the four corners of the body.

The two suspension wires of each half of the suspension wires each located at opposite ends of the body in the tracking direction X are arranged side by side in the tracking direction X.

The suspension wires are arranged in an acute angle to the information direction Z in such a way that the distance, in the tracking direction X, between them is slightly bigger at the holder elements that at the corners of the body. In particular, two suspension wires each extend outwards from a corner of the body to the corresponding holder element in an acute angle between 2° and 6°.

## Claims

1. An actuator (P) for accessing moving storage media (D) carrying substantially parallel information tracks (T), the actuator (P) having a carrier (C), a lens holder (A) and suspension wires (4) joining the carrier (C) and the lens holder (A),
the lens holder (A) having a body (B) with a lens (3) movable in a tracking direction (X) and in a focus direction (Y),
the carrier (C) having a first holder element (2A) and a second holder element (2B) arranged at opposite sides of the body (B) in an information direction (Z) orthogonal to the tracking direction (X) and the focus direction (Y), and the suspension wires (4) extending at opposite sides of the body (B) in the information direction (Z), being connected to the holder elements (2A, 2B), and being connected to the body (B) at opposite sides of the body (B) in the tracking direction (X), the actuator (P) **characterized in that**
the suspension wires (4) are rigidly connected to the first holder element (2A) and movably connected to the second holder element (2B).

2. An actuator (P) according to claim 1, where the rigid connection of the suspension wires (4) to the first holder element (2A) is embodied as a soldering point (12) or as a gluing point.

3. An actuator (P) according to claim 1 or 2, where the movable connection of the suspension wires (4) is embodied as a hole through the second holder element (2B).

4. An actuator (P) according to one of the claims 1 to 3, where the suspension wires (4) are arranged in one plane orthogonal to the focus direction (Y).

5. An actuator (P) according to one of the claims 1 to 4, having a number (N) of suspension wires which is an integer multiple (I) of two, where the suspension wires (4) extend between the first holder element (2A) and the second holder elements (2B) and are connected to the body (B) at its centre region at opposite sides of the body (B) in the tracking direction (X).

6. An actuator (P) according to claim 5, where the integer multiple (I) is two or more and where the two or more suspension wires (4) each located at opposite sides of the body (B) in the tracking direction (X) are arranged side by side in the tracking direction (X).

7. An actuator (P) according to claim 5 or 6, where the suspension wires (4) are arranged parallel in the information direction (Z).

8. An actuator according to one of the claims 1 to 4, having a number (N) of suspension wires which is an integer multiple (I) of four, where first suspension wires of a first half extend between the first holder element and the body and second suspension wires of a second half extend between the second holder element and the body and where the suspension wires of both halves are connected to the body at opposite ends of the body in the tracking direction (X).

9. An actuator according to claim 8, where the integer multiple (I) is two or more and where the two or more suspension wires of each half of the suspension wires each located at opposite sides of the body in the tracking direction (X) are arranged side by side in the tracking direction (X).

10. An actuator according to claim 8 or 9, where the suspension wires are arranged at an acute angle relative to the information direction (Z) **and extend outwards from the body to the holder elements.**

11. A moving storage media drive **characterized in that** it has an actuator (P) according to one of the claims 1 to 10.
